# EUROPÄISCHE PATENTSCHRIFT

(11) **EP 1 761 590 B1**
(45) Veröffentlichungstag und Bekanntmachung des Hinweises auf die Patenterteilung: **05.08.2009**
(21) Anmeldenummer: 04797593.3
(22) Anmeldetag: 04.11.2004
(51) Int. Cl.: C08J 7/02, G02B 5/30, C09K 19/38, F21V 9/14, B42D 15/10, B44F 1/00

(54) **VERFAHREN ZUR MODIFIKATION VON CHIRALEN FLÜSSIGKRISTALLFILMEN MIT HILFE VON EXTRAKTIONSMITTELN**
METHOD FOR MODIFYING CHIRAL LIQUID CRYSTAL FILMS WITH THE AID OF EXTRACTING AGENTS
PROCEDE DE MODIFICATION DE FILMS DE CRISTAUX LIQUIDES CHIRAUX A L'AIDE D'AGENTS D'EXTRACTION

(30) Priorität: 21.11.2003 EP 03026750
(43) Veröffentlichungstag der Anmeldung: 14.03.2007
(73) Patentinhaber: Merck Patent GmbH, 64293 Darmstadt (DE); KBA-METRONIC AG, 97209 Veitshöchheim (DE)
(72) Erfinder: KUNTZ, Matthias, 64342 Seeheim-Jugenheim (DE); HAMMOND-SMITH, Robert, Damerham, Hampshire SP6 3HA (GB); RIDDLE, Rodney, Poole, Dorset BH12 3AG (GB); PATRICK, John, Poole, Dorset BH20 4DH (GB); UKELIS, Michael, 64560 Riedstadt (DE); SCHMITZER, Siegfried, 97273 Kürnach (DE); SCHMITT, Peter, 97079 Würzburg (DE)
(86) Internationale Anmeldenummer: PCT/EP2004/012466
(87) Internationale Veröffentlichungsnummer: WO 2005/049703

(56) Entgegenhaltungen:
- EP-A- 0 435 029
- EP-A- 0 885 945
- EP-A- 0 889 120
- US-A- 6 071 438

## Beschreibung

Die Erfindung betrifft ein Verfahren zur Modifikation von chiralen Flüssigkristallfilmen, insbesondere von deren Reflexionswellenlänge, bei dem eine chirale Flüssigkristallschicht mit einem extrahierend wirkenden flüssigen Medium (Extraktionsmittel) durch Beschichtungs- oder Druckverfahren so in Kontakt gebracht wird, dass es zu einer Diffusion von Substanzen aus der Flüssigkristallschicht in das Extraktionsmittel kommt.

In cholesterischen oder allg. chiral nematischen Flüssigkristallmaterialien (engl.: Liquid Crystals = LC) bilden die Flüssigkristallmoleküle eine zur Moleküllängsachse senkrecht stehende helixartige Überstruktur aus.

Die Begriffe "chiral nematisch" und "cholesterisch" werden im Stand der Technik nebeneinander verwendet. Als "chiral nematisch" bezeichnet man häufig LC-Materialien bestehend aus einer nematischen Wirtsmischung, die mit einer optisch aktiven Komponente dotiert ist, welche eine helikal verdrillte Überstruktur in der Wirtsmischung induziert. Dagegen wird der Begriff "cholesterisch" oft für chirale LC-Materialien verwendet, die eine "natürliche" cholesterische Phase mit helikaler Verdrillung aufweisen, wie zum Beispiel Cholesterylderivate. Oft werden beide Begriffe auch zur Bezeichnung desselben Gegenstandes verwendet, In der vorliegenden Anmeldung wird für beide oben genannten Typen von LC-Materialien der Begriff "cholesterisch" verwendet, wobei dieser Begriff die jeweils weitestgehende Bedeutung von "chiral nematisch" und "cholesterisch" umfassen soll.

Der Begriff "flüssigkristalline Verbindung" oder "mesogene Verbindung", wie vor- und nachstehend genannt, umfaßt Verbindungen mit einer oder mehreren stäbchenförmigen, brettförmigen oder scheibchenförmigen mesogenen Gruppen, d.h. Gruppen, die eine Mesophase oder Flüssigkristallphase induzieren können. Verbindungen mit stäbchenförmigen oder brettförmigen Gruppen sind auch als "kalamitische" Flüssigkristalle, Verbindungen mit scheibchenförmigen Gruppen auch als "diskotische" Flüssigkristalle bekannt. Die mesogenen Verbindungen können selbst Flüssigkristallphasen ausbilden. Es ist aber auch möglich, dass sie erst im Gemisch mit anderen Verbindungen oder nach Polymerisation Flüssigkristallphasen ausbilden.

Die bemerkenswerten optischen Eigenschaften der cholesterischen Phase bestehen in einer hohen optischen Rotation sowie einem ausgeprägten Zirkulardichroismus, der durch Selektivreflexion von zirkular polarisiertem Licht innerhalb der Schicht entsteht. Die je nach Blickwinkel unterschiedlich erscheinenden Farben sind abhängig von der Ganghöhe der helixartigen Überstruktur. Dabei ergeben sich außerordentlich interessante Effekte mit u. a. farb- und polarisationsselektiven Reflexionen. Diese besitzen ein umfangreiches Potential zur Verwendung beispielsweise im Sicherheitsdruck von Wertpapieren, Banknoten, Ausweiskarten oder dergleichen. Allerdings machen stetig wachsende Anforderungen im Hinblick auf die Fälschungssicherheit derartiger Dokumente in zunehmendem Maße das Einbringen zusätzlicher Sicherheitsmerkmale notwendig.

Eine Aufgabe der vorliegenden Erfindung ist daher die Bereitstellung von modifizierten chiralen Flüssigkristallfilmen, die sich insbesondere zur Verwendung in Sicherheitsmarkierungen eignen, sowie von Verfahren zu ihrer Herstellung.

Es wurde gefunden, dass zur Lösung dieser Aufgabe ein Verfahren zur Modifikation von LC-Filmen gemäß der vorliegenden Erfindung hervorragend geeignet ist. Nach diesem Verfahren wird eine polymerisierbare chirale, vorzugsweise cholesterische LC-Schicht mit einem extrahierend wirkenden flüssigen Medium (Extraktionsmittel) so in Kontakt gebracht wird, dass es zu einer Diffusion von Substanzen aus der LC-Schicht in das Extraktionsmittel kommt. In einem ersten Schritt werden cholesterische LC-Materialien oder Lacke auf eine dunkle Substratoberfläche so aufgebracht, dass eine homogene Struktur der cholesterischen Phase erzeugt wird, und die LC-Schicht teilweise oder vollständig ausgehärtet. In einem zweiten Schritt wird ein Extraktionsmittel mittels eines geeigneten Druckverfahrens auf den LC-Film aufgebracht. Im Zuge des Diffusions- und Extraktionsprozesses kommt es zu einer Verschiebung der jeweiligen, betrachtungswinkelabhängigen Reflexionsbanden des LC-Filmes in den Bereich kürzerer Wellenlängen. Das Extraktionsmittel kann auch so beschaffen sein, dass es über die rein extrahierende Funktion bzw. optische Modifikation des LC-Filmes hinaus weitere, zum Beispiel optische, elektrooptische oder elektrische Aufgaben erfüllt.

Die Patentschrift US 6,071,438 und die korrespondierende deutsche Offenlegungsschrift DE 197 18 293 A1 beschreiben die Extraktion von extrahierbaren Komponenten aus unvollständig oder vollständig ausgehärteten cholesterischen LC-Filmen zum Zwecke der Verbreiterung der Reflexionsbanden der cholesterischen Flüssigkristalle sowie die Verwendung der daraus hervorgehenden Schichten als Breitbandfilter, Polarisatoren oder Reflektoren. Die beschriebenen der Extraktion unterzogenen LC-Schichten sind 5 bis 200 µm, besonders bevorzugt zwischen 15 und 80 µm dick. Der Angriff der extrahierend wirkenden Medien wird vorzugsweise so ausgeführt, dass ein Gradient der Netzwerkdichte erzielt wird. Zur Extraktion werden organische Lösungsmittel oder Gemische davon eingesetzt, die auf Grund ihrer chemischen Beschaffenheit für eine weitere Reaktion, insbesondere eine Polymerisation zu reaktionsträge sind. Die Extraktionszeiten bewegen sich entsprechend den beschriebenen Ausführungsbeispielen im Bereich zwischen 5 und 10 Sekunden, wobei sich jeweils eine 2-minütige Behandlung bei 90 °C zum Zwecke des Abdampfens des Restlösungsmittels anschließt.

Das in der US 6,071,438 und DE 197 18 293 A1 beschriebene Verfahren erfordert jedoch eine sehr genaue Kontrolle der Arbeitsgänge und Zeiten, was zu einem aufwändigen und kostenintensiven Verfahren führt. Die beschriebene Temperaturbehandlung schränkt zudem die verwendbaren Trägermaterialien ein, da temperaturempfindliche Trägermaterialien wie beispielsweise Folien oder dünne Plastikkarten nicht verwendet werden können, da sie sich unter übermäßiger Temperaturbelastung dauerhaft verformen und somit in einem nachfolgenden Produktionsschritt nicht mehr weiterverarbeitet werden können.

Ein Verfahren zur Modifikation der chiralen LC-Schicht mittels Druckverfahren zum Aufbringen der Extraktionsmittel wird in US 6,071,438 bzw. DE 197 18 293 A1 nicht beschrieben, ebenso nicht die Verwendung von extrahierend wirkenden Medien, die nach Verfestigung durch Verdunsten des Lösungsmittels oder Polymerisation oder dgl. selbst Aufgaben, zum Beispiel solche optischer Art, erfüllen.

In der EP 0 606 940 A2 und der korrespondierenden deutschen Patentschrift DE 694 17 776 T2 wird ein cholesterischer Breitbandpolarisator beschrieben, der das Kennzeichen aufweist, dass die Steigung der helikalen Ganghöhe nahezu kontinuierlich zunimmt von einem minimalen Wert an der einen Oberfläche der Schicht zu einem maximalen Wert an der anderen Oberfläche der Schicht. Dies wird unter anderem dadurch verwirklicht, dass eine Oberfläche einer optisch aktiven Schicht aus polymerisierbarem, LC-Material mit cholesterischer Ordnung mit einem Film aus reaktiven Monomeren versehen wird, die durch Diffusion einen Konzentrationsgradienten in der Schicht verursachen. Die Diffusion der Monomere in die optisch aktive Schicht läßt diese Schicht quellen. Diese Quellung führt zu einer Vergrößerung der Steigung der Molekülspirale und bei Anbringen eines Konzentrationsgradienten an Monomer über die Dicke der Schicht bzw. entsprechend gewählter Einwirkdauer oder der Verwendung von Gemischen aus unterschiedlich schnell diffundierenden Monomeren zu einer Variation der Steigung der Molekülspirale. Durch die Polymerisation der Monomere wird die Diffusion in der optisch aktiven Schicht beendet.

Die in EP 0 606 940 A2 und DE 694 17 776 T2 beschriebenen Polarisatoren haben jedoch hohe Dicken der optisch aktiven Schichten im Bereich von 20 µm. Außerdem erfordert das darin beschriebene Verfahren lange Diffusionszeiten von ca. 10 Minuten bei 60 °C. Dies ist insbesondere für Herstellung von Filmen im großtechnischen Maßstab ein Nachteil.

Die WO 96/02597 und die korrespondierenden deutschen Offenlegungsschriften DE 44 41 651 A1 und DE 195 32 419 A1 beschreiben ein Verfahren zum Beschichten und Bedrucken von Substraten mit polymerisierbaren chiralen LC-Materialien, die ein polymeres oder polymerisierbares Bindemittel enthalten. Ein Verfahren zur Modifikation der aufgebrachten LC-Schichten durch Extraktion wird darin jedoch nicht beschrieben.

EP-A-0 885 945 offenbart ein Verfahren zur Verbreiterung cholesterischer Reflexionsbanden von photopolymerisierbaren cholesterischen Flüssigkristallen und nach diesem Verfahren hergestellte optische Elemente.

Aus der EP-A-0 435 029 ist ein Datenträger, insbesondere ein Wertpapier, Dokument, Ausweiskarte oder dergleichen mit einem optisch variablen Sicherheitselement, das ein Flüssigkristall-Material enthält, bekannt.

Eine weitere Aufgabe der vorliegenden Erfindung ist daher die Bereitstellung eines Verfahrens, welches die Nachteils der in den oben genannten Schriften offenbarten Verfahren vermeidet. Eine weitere Aufgabe der vorliegenden Erfindung ist es, eine Möglichkeit zu schaffen, durch ein Extraktionsverfahren variable Informationen in eine gehärtete Flüssigkristallschicht dauerhaft einzubringen.

Es wurde gefunden, dass die oben genannten Aufgaben gelöst werden können durch die Bereitstellung eines Verfahrens gemäß der vorliegenden Erfindung wie vor- und nachstehend beschrieben.

Gegenstand der vorliegenden Anmeldung ist ein Verfahren zur Modifikation der optischen Eigenschaften von polymerisierbaren oder polymerisierten chiralen Flüssigkristallen, insbesondere zur Verschiebung deren optischer Reflexionsbande, vorzugsweise in den höherenergetischen Bereich, **dadurch gekennzeichnet, dass** es folgende Schritte umfaßt:
i) Aufbringen einer ersten Schicht eines polymerisierbaren oder härtbaren chiralen Flüssigkristallmaterials auf einen Träger,
ii) Teilweises oder vollständiges Polymerisieren oder Härten der ersten Schicht des polymerisierbaren chiralen Flüssigkristallmaterials,
iii) Aufbringen mindestens einer weiteren Schicht eines oder mehrerer extrahierend wirkender Mittel mittels eines Druckverfahrens auf die teilweise oder vollständig polymerisierte oder gehärtete erste Flüssigkristallschicht, und
iv) gegebenenfalls vollständiges Polymerisieren oder Härten der ersten Flüssigkristallschicht und/oder einer oder mehrerer der weiteren Schichten.

Ein weiterer Gegenstand der Anmeldung ist ein Flüssigkristallfilm hergestellt nach einem Verfahren gemäß der vorliegenden Erfindung.

Ein weiterer Gegenstand der Anmeldung ist ein Druckerzeugnis enthaltend ein oder mehrere Schichten eines gehärteten oder polymerisierten chiralen Flüssigkristallmaterials, hergestellt nach einem Verfahren gemäß der vorliegenden Erfindung.

Ein weiterer Gegenstand der Anmeldung ist ein erfindungsgemäßes Druckerzeugnis, das mindestens eine doppelbrechende Markierung enthält.

Ein weiterer Gegenstand der Anmeldung ist ein Druckerzeugnis mit einem Druckbild, welches nach einem Verfahren gemäß der vorliegenden Erfindung erzeugt wird, **dadurch gekennzeichnet, dass**
i) das Druckbild mindestens einen Bereich mit einem ersten optischen Effekt aufweist, und
ii) das Druckbild mindestens einen Bereich mit einem zweiten optischen Effekt aufweist, der sich von dem ersten optischen Effekt durch eine Verschiebung der optischen Reflexionsbanden zum höherenergetischen Bereich hin unterscheidet.

Ein weiterer Gegenstand der Anmeldung ist ein erfindungsgemäßes Druckerzeugnis, **dadurch gekennzeichnet, dass** mindestens eine der Schichten eine optisch variable Komponente zur Erzeugung von optischen Effekten aufweist, und

ein weiterer Gegenstand der Anmeldung ist ein erfindungsgemäßes Druckerzeugnis, **dadurch gekennzeichnet, dass** ein optischer Effekt durch die Diffusion von Komponenten aus einem aufgetragenen Mittel einer ersten Schicht in eine andere mit ihr in Kontakt gebrachte zweite Schicht erzeugt wird.

Ein weiterer Gegenstand der Anmeldung ist die Verwendung eines Flüssigkristallfilms oder Druckerzeugnisses, hergestellt nach einem Verfahren gemäß der vorliegenden Erfindung, als dekoratives Element, Sicherheits-, Authentizitäts- oder Identifikatiönselement, unter Verwendung variabel eingebrachter Informationen.

Ein weiterer Gegenstand der Anmeldung ist ein Sicherheitsmerkmal, Authentizitätsmerkmal oder Identifikationsmerkmal, enthaltend einen erfindungsgemäßen Flüssigkristallfilm oder ein erfindungsgemäßes Druckerzeugnis.

Ein weiterer Gegenstand der Anmeldung ist ein Wertdokument, Ausweisdokument oder Geldschein, eine Farbtransfer-Folie, reflektive Folie, oder ein optischer Datenträger versehen mit mindestens einem Flüssigkristallfilm, Druckerzeugnis, Sicherheitsmerkmal, Authentizitätsmerkmal oder Identifikationsmerkmal gemäß der vorliegenden Erfindung.

Der vorliegenden Erfindung liegen stofflicherseits polymerisierbare oder härtbare Druckfarben zugrunde, die aus chiral nematischen oder cholesterischen flüssigkristallinen Farben oder Lacken bestehen, oder Farben oder Lacke, die in ihrer Gesamtheit chiral nematogen sind. Bevorzugt kommen hier Farben oder Lacke zu Einsatz, die strahlungshärtend besonders bevorzugt UV-härtend sind und unter Einwirkung von Licht, UV-Strahlung, oder Elektronenstrahlen polymerisieren oder aushärten.

In einem ersten Schritt des erfindungsgemäßen Verfahrens wird ein Film oder eine Schicht von chiralen LC-Substanzen, vorzugsweise cholesterische Substanzen, oder Substanzen, die in ihrer Gesamtheit chiral mesogen sind, auf eine Substratoberfläche aufgebracht und mittels geeigneter Verfahren gehärtet, polymerisiert oder vernetzt. Das Aufbringen der LC-Substanzen erfolgt vorzugsweise mittels eines ersten Druckverfahrens, wie zum Beispiel Flexodruck, Offsetdruck, Tiefdruck, Hochdruck oder InkJet-Druck, oder mit Hife eines ersten Beschichtungsverfahrens wie zum Beispiel Walzen, Sprühen oder Tauchen. Vorzugsweise wird eine dunkle, insbesondere schwarze oder braune Substratoberfläche verwendet. Hierbei wird eine homogene Struktur der chiralen Mesophase entweder spontan beim Aufbringen des LC-Materials oder mittels geeigneter Verfahren erzeugt, die dem Fachmann bekannt und in der Literatur beschrieben sind. Bei cholesterischen Flüssigkristallen ist dies vorzugsweise die planare Orientierung (Greandjean-Textur).

Geeignete Substrate oder Bedruckstoffe sind zum Beispiel Filme oder Folien aus Kunststoff, Papier, Karton, Leder, Zellstoff, Textilien, Glas, Keramik oder Metall. Geeignete Kunststoffe sind zum Beispiel Polyester wie Polyethylenterephthalat (PET) oder Polyethylennaphthalat (PEN), Polyvinylalkohol (PVA), Polycarbonat (PC), Di- oder Triacetylcellulose (DAC, TAC), insbesondere PET oder TAC. Besonders bevorzugt sind dunkle oder geschwärzte Substrate,

In einem zweiten Schritt wird mit Hilfe eines zweiten geeigneten Druckverfahrens ein extrahierend wirkendes Medium (Extraktionsmittel) ganz oder teilweise auf den LC-Film aufgebracht. Im Zuge des Diffusions- und Extraktionsprozesses kommt es an den Stellen des aufgebrachten Extraktionsmittels zu einer Verschiebung der jeweiligen, betrachtungswinkelabhängigen Reflexionsbanden des LC-Filmes in den Bereich kürzerer Wellenlängen. Das extrahierend wirkende Medium kann zusätzlich so beschaffen sein, dass es über die rein extrahierende Funktion bzw. optische Modifikation des LC-Filmes hinaus weitere, zum Beispiel optische, elektrooptische oder elektrische Aufgaben erfüllen kann.

So kann beispielsweise mittels eines sogenannten "Continuous InkJet"-Gerätes eine Tinte als Extraktionsmittel aufgebracht werden. Die in diesen Geräten verwendeten Tinten basieren in der Regel auf einem oder mehreren Lösungsmittel, welches die erfindungsgemäßen Eigenschaften aufweist. Wählt man hierbei eine solche Tinte, die zusätzlich fluoreszierende Farbstoffe oder Pigmente beinhaltet, so ergibt sich ein fünffaches Sicherheitsmerkmal enthaltend die polarisierenden Eigenschaften der LC-Schicht, den betrachtungswinkelabhängigen Farbeindruck, den veränderten Farbeindruck, die Fluoreszenz an den Stellen, an denen die InkJet-Farbe aufgebracht wurde, und durch den Einsatz eines frei programmierbaren InkJet-Gerätes eine variable Information zum Beispiel in Form eines Textes, eines Bildes, eines Strichcodes o.ä.. Die Art der Fluoreszenz hängt von den verwendeten Farbsorten oder Pigmenten ab und kann zum Beispiel mit UV-Licht oder durch Up-conversion mit IR-Licht sichtbar gemacht werden.

Gegebenenfalls wird in einem dritten Schritt der LC-Film nach Extraktion vollständig polymerisiert oder vernetzt, so dass die chirale Struktur der LC-Schicht mit der veränderten Reflexionswellenlänge fixiert wird, insbesondere, wenn die Extraktionsmittel oder in ihm gelöste Anteile selbst polymerisierbar ausgeführt sind.

Der gehärtete LC-Film ist vorzugsweise ein Polymernetzwerk.

Als LC-Materialien eignen sich insbesondere aus dem Stand der Technik bekannte photopolymerisierbare, zum Beispiel UV-härtbare, Druckfarben cholesterischer Flüssigkristalle, besonders polymerisierbare cholesterische LC-Verbindungen und -Mischungen wie nachfolgend beschrieben. Wie eingangs beschrieben bilden Flüssigkristalle in der cholesterischen Phase eine zu den Längsachsen ihrer Moleküle senkrecht stehende helixartige Überstruktur aus, und zeigen eine hohe optische Rotation sowie einen ausgeprägten Zirkulardichroismus durch Selektivreflexion von zirkular polarisiertem Licht innerhalb der Schicht. Die dabei je nach Blickwinkel unterschiedlich erscheinenden Farben sind abhängig von der Ganghöhe der helixartigen Überstruktur, die ihrerseits vom Verdrillungsvermögen der chiralen Komponente abhängt. Dabei kann die Ganghöhe insbesondere durch Änderung der Konzentration der chiraler Komponente, zum Beispiel in Form eines chiralen Dotierstoffes, oder Änderung der Netzwerkdichte des Polymergerüstes variiert werden. Diese Variation hat wiederum eine Änderung des Wellenlängenbereiches des selektiv reflektierten Lichtes der cholesterischen Schicht zur Folge.

Werden daher im Sinne der vorliegenden Erfindungsmeldung mit Hilfe eines geeigneten Extraktionsmittels die chiralen Bestandteile der LC-Filme herausextrahiert oder andere, nicht oder ungenügend einpolymerisierte Bestandteile auf diese Weise entfernt, so hat dies eine Abnahme der helikalen Ganghöhe und damit eine Verschiebung der Reflexionswellenlängen in den höherenergetischen, kürzerwelligen Bereich zur Folge.

In einer bevorzugten Ausführungsform ist das extrahierend wirkende Medium ein Lösungsmittel oder Lösungsmittelgemisch, das radikalisch oder kationisch nicht polymerisiert werden kann.

Geeignete und bevorzugte Extraktionsmittel sind organische Lösungsmittel, die entspechend ihrer strukturellen Beschaffenheit zu unterteilen sind in
(a) unpolar aprotische Lösungsmittel, welche kleine Dipolmomente und niedrige Dielektrizitätskonstanten besitzen, ausgewählt aus zum Beispiel Hexan, Benzol, Toluol, Tetrachlorkohlenstoff, Dioxan, Diethylether, Tetrahydrofuran,
(b) polar aprotische Lösungsmittel, welche große Dipolmomente und hohe Dielektrizitätskonstanten besitzen, ausgewählt aus zum Beispiel Aceton, Nitrobenzol, Dimethylformamid, Dimethylsulfoxid, Methylethylketon (2-Butanon), Ethylacetat, und
(c) protische Lösungsmittel, welche stark polare OH- oder NH-Gruppen enthalten und mit anderen Molekülen Wasserstoffbrückenbindungen ausbilden können, ausgewählt aus zum Beispiel Methanol, Ethanol, Ethylenglykol und Anilin.

Es können aber auch Gemische dieser Lösungsmittel eingesetzt werden. Insbesondere eignen sich Vertreter der zuletzt aufgeführten Gruppe (c), welche im Hinblick auf die erfindungsgemäßen LC-Materialien eine relativ schlechte oder nicht erkennbare Extraktionskraft besitzen, dazu, um die starke bis sehr starke Extraktionskraft der Vertreter der vorgenannten Gruppen (a) und (b) abzuschwächen bzw. eine Feindosierung der Extraktionswirkung dieser Lösungsmittel zu ermöglichen.

In einer bevorzugten Ausführungsform enthält das Extraktionsmittel ein oder mehrere Lösungsmittel ausgewählt aus Gruppe (a).

In einer weiteren bevorzugten Ausführungsform enthält das Extraktionsmittel ein oder mehrere Lösungsmittel ausgewählt aus Gruppe (b).

In einer weiteren bevorzugten Ausführungsform ist das Extraktionsmittel ein Gemisch enthaltend mindestens ein Lösungsmittel der Gruppe (a) und/oder (b).

In einer bevorzugten Ausführungsform ist das Extraktionsmittel ein Gemisch enthaltend mindestens ein Lösungsmittel aus Gruppe (a) und/oder (b) und mindestens ein Lösungsmittel der Gruppe (c).

Vorteilhaft gegenüber der Patentschrift US 6,071,438 kommen für das erfindungsgemäße Verfahren als Extraktionsmittel auch solche in Betracht, die bei Kontakt mit der LC-Schicht zwar zunächst einen Diffusions- und Extraktionsprozeß bewirken, dann aber willkürlich durch geeignete Mittel, wie zum Beispiel UV-Strahlung vollständig polymerisiert werden können.

In einer weiteren bevorzugten Ausführungsform sind die Extraktionsmittel zum Beispiel radikalisch oder kationisch härtende handelsübliche Klarlacke, die keine oder nur geringe Mengen, vorzugsweise weniger als 5%, an reaktionsträgen, organischen Lösungsmitteln enthalten. Die extrahierende Wirkung ist in diesen Fällen auf die Anwesenheit anderer Komponenten zurückzuführen, wie zum Beispiel der in diesen Lacken enthaltenen Bindemittel-Vorstufen oder Monomere wie Acrylaten, Diacrylaten, Triacrylaten, Epoxiden oder Vinylethern, welche die Fähigkeit besitzen, zum einen Substanzen aus der LC-Schicht herauszulösen und zum anderen zu einem molekularen Netzwerk reagieren zu können. Dabei sollte wenigstens ein Teil der Monomere zwei oder mehr polymerisierbare Gruppen enthalten. Dadurch ist die Möglichkeit für ein dreidimensionales Netzwerk gegeben, wodurch eine weitere Extraktion eingeschränkt ist.

In einer weiteren bevorzugten Ausführungsform sind die Extraktionsmittel LC-Verbindungen, insbesondere härtbare oder polymerisierbare LC-Verbindungen, oder deren Gemische. Gemäß dieser bevorzugten Ausführungsform wird eine zweite, aushärtbare LC-Schicht in Form ihrer flüssigen, smektischen, nematischen, cholesterischen oder isotropen Phase auf die im oben beschriebenen ersten Schritt auf ein Substrat aufgebrachte und gehärtete erste LC-Schicht appliziert, nämlich mittels eines geeigneten Druckverfahrens. Nach einer genügend langen Einwirkdauer bzw. nach der erfolgten Modifikation der ersten LC-Schicht wird dann die zweite LC-Schicht ausgehärtet. Durch geeignete Wahl der unterschiedlichen Zusammensetzungen der beiden LC-Schichten lassen sich beispielsweise Konzentrationsgefälle realisieren, die zu einer Diffusion von Monomeren aus der ersten LC-Schicht führen, woraus ein reduzierter Gangunterschied der Helix in der ersten LC-Schicht resultiert.

In einer weiteren bevorzugten Ausführungsform der Erfindung besteht das Extraktionsmittel aus einem Lösungsmittel der o.g. Gruppe (a) oder (b) oder einem entsprechenden Gemisch dieser Lösungsmittel, sowie einem weiteren Anteil an einem oder mehreren Komponenten, die nach Verdunsten des Lösungsmittels oder Lösungsmittelgemisches einen Druckfilm ergeben, der entweder schon gebrauchsfertig beziehungsweise fest ist oder aber gebrauchsfertig beziehungsweise fest wird im Zuge einer zusätzlichen Härtungsreaktion, welche zum Beispiel durch die Einwirkung aktinischer Strahlung initiiert wird.

Der prozentuale Anteil der Lösungsmittel der o.g. Gruppe (a) oder (b) oder des Gemisches aus (a) und (b) im Extraktionsmittel hängt unter anderem von der Wahl des Auftragsverfahrens und des dazu geeigneten Auftragsmittels ab, und beträgt zum Beispiel bei Walzenauftragsverfahren vorzugsweise 10 % bis 60 % und bei InkJet Verfahren vorzugsweise 70 % bis 95 %.

In einer weiteren bevorzugten Ausführungsform sind die Extraktionsmittel Mischungen smektischer, nematischer oder cholesterischer LC's mit organischen Lösungsmitteln besonders der oben genannten Gruppen (a), (b) oder entsprechender Gemische davon. Diese werden auf die im oben beschriebenen ersten Schritt auf ein Substrat aufgebrachte und gehärtete erste LC-Schicht appliziert, nämlich mittels eines geeigneten Druckverfahrens. Nach einer genügend langen Einwirkdauer beziehungsweise nach erfolgter Modifikation der ersten LC-Schicht sowie nach abgeschlossener Verdunstung des Lösungsmittels oder Lösungsmittelgemisches wird dann die zweite LC-Schicht ausgehärtet.

Generell ist es jedoch bevorzugt, auf die Verwendung von nicht einpolymerisierbaren, in vielen Fällen ökologisch bedenklichen Lösungsmitteln weitgehend zu verzichten.

Prinzipiell können als Extraktionsmittel Tinten, Druckfarben und Lacke eingesetzt werden, welche einerseits eine Veränderung der farb- und polarisationsselektiven Reflexion der LC-Schichten bewirken, andererseits, wie bereits ausgeführt, einen eigenen optischen Effekt aufweise. Dieser besteht im einfachsten Fall in einer bestimmten Farbigkeit und einem bestimmten Glanz, die sich aus dem Wechselspiel von Absorption, Transmission und Reflexion ergeben.

Besonders relevant für den Sicherheitsdruck sind solche Tinten, Druckfarben und Lacke, welche weitergehende Funktionen erfüllen, insbesondere spezielle Eigenschaften wie zum Beispiel thermische und elektrische Leitfähigkeit, magnetische Suszeptibilität, dielektrische, optische und elasto-mechanische Anisotropie, Fluoreszenz oder Phosphoreszenz. Es ist auch möglich, dass das aufzubringende Extraktionsmittel für sich allein keinen optischen Effekt besitzt, sondern sich dieser erst in Zusammenhang mit der Beschichtung beziehungsweise Bedruckung der zugrundeliegenden cholesterischen LC-Schicht ergibt. Die optischen Effekte können sich gegenseitig ergänzen, verstärken oder auslöschen. Weiterhin können die genannten Tinten, Druckfarben und Lacke funktionelle Eigenschaften aufweise, wie beispielsweise eine glänzende oder matte Oberfläche, Kratzfestigkeit, oder schmutzabweisend ausgeführt sein.

In einer weiteren bevorzugten Ausführungsform der Erfindung führt die Diffusion bestimmter Komponenten aus einer gegebenen LC-Schicht in das extrahierend wirkende Medium nicht nur zu einer Variation der polarisations- und farbselektiven Reflexionseigenschaften der LC-Schicht, sondern auch zu einer Modifikation der optischen oder reaktiven Eigenschafen des extrahierend wirkenden Mediums oder einer oder mehrerer Bestandteile davon. Zum Beispiel können aus der LC-Schicht chirale Dotierstoffe, die dort nicht einpolymerisiert waren, in das extrahierend wirkende Medium diffundieren, das, sofern es zum Beispiel nematischer Natur war, auf diese Weise eine Verdrillung, oder falls es zum Beispiel cholesterischer Natur war, eine Variation seiner Verdrillungsverhältnisse und damit anisotropen Eigenschaften erfährt. In einer weiteren bevorzugten Variante dieser Ausführungsform kommt es zur Extraktion von reaktionsfähigen Bestandteilen aus der LC-Schicht in das extrahierende Medium, die in der Lage sind, mit einer oder mehrerer Komponenten des Extraktionsmittels chemisch zu reagieren und zum Beispiel dessen Härtung durch Polykondensation oder Polyaddition auszulösen.

Die Ausführungsvarianten der vorliegenden Erfindungsmeldung zeichnen sich dadurch aus, dass die Änderung der farb- und polarisationsselektiven Reflexionseigenschaften einer mit dem extrahierend wirkenden, flüssigen Medium in Kontakt gebrachten LC-Schicht sehr rasch erfolgt, vorzugsweise im Bereich von 1 Sekunde, besonders bevorzugt im Bereich von weniger als 1 Sekunde. Ähnliche Zeiten betreffen eventuell zu berücksichtigende Sekundärreaktionen in dem extrahierend wirkenden Medium oder einem oder mehreren Bestandteilen davon, welche, wie bereits beschrieben, in bestimmten Fällen durch aus der LC-Schicht herausextrahierte Komponenten initiiert werden können.

Im Unterschied zu US 6,071,438 durchdringen im Verfahren entsprechend der vorliegenden Erfindung die extrahierend wirkenden Medien bzw. die extrahierend wirkenden Bestandteile dieser Medien die LC-Schichten vollständig und gleichmäßig. Dadurch, dass über die gesamte Schichtdicke des LC-Filmes eine homogene Extraktion induziert wird, ergibt sich über die Schichtdicke hinweg kein Gradient der helikalen Ganghöhe (pitch), der Netzwerkdichte beziehungsweise des Brechungsindizes. Vielmehr kommt es zur Ausbildung einer helikalen Ganghöhe in der LC-Schicht, die kleiner ist als die ursprüngliche Ganghöhe (d.h. vor Extraktion).

Die extrahierend wirkenden, flüssigen Medien (Extraktionsmittel) können aufgebracht werden in Form von Lacksystemen, Druckfarben und Tinten oder in Form reiner, organischer Lösungsmittel. Als Applikationsmethode eignet sich das Drucken. Die Temperaturen liegen im Bereich zwischen 0 °C und über 200 °C und sind insbesondere von den Schmelz-, Phasenübergangs- und Siedetemperaturen der eingesetzten Medien und der zu modifizierenden LC-Schicht abhängig. Eine besondere Rolle spielt hierbei auch die Wärmeleitfähigkeit der LC-Schicht sowie des Substates bzw. Trägermaterials. Es lassen sich alle üblichen Druckverfahren anwenden, zum Beispiel Hoch-, Tief-, Flexo-, Offset-, Sieb-, Präge- oder Tintenstrahldruck, wobei Druckverfahren im Sinne der Erfindungsmeldung auch solche sind, bei denen das extrahierend wirkende Medium mit Hilfe eines Füllfederhalters oder Kugelschreibers aufgetragen wird.

In einer besonders bevorzugten Ausführungsform wird das extrahierend wirkende Medium mit Hilfe von kommerziell erhältlichen Tintenstrahldruckern beispielsweise der Firma Metronic AG aufgebracht. Beispielhaft verwendet wurden InkJet Geräte des Types "AlphaJet" und InkJet Geräte des Types "BetaJet". "AlphaJet" Geräte arbeiten im sog. "Continuous Flow-Betrieb" und verwenden Tinten auf der Basis von schnell verdampfenden Lösungsmitteln. "BetaJet" Geräte arbeiten im sog. "Drop on Demand-Betrieb" und verwenden Tinten, die vorzugsweise frei von zu verdampfenden Lösungsmitteln sind. Beide Verfahren sind dem Fachmann hinsichtlich ihrer Technologie und ihren Vor-und Nachteile bekannt. Für das erfindungsgemäße Verfahren sind beide Technologien geeignet, da das zu verdruckende Extraktionsmedium entsprechend den genannten Zusammensetzungen an beide Tintenstrahldrucker angepasst werden kann. Die Tinten können hierbei zusätzlich erwärmt werden, wodurch eine weitere Einflußnahme auf ihre Extraktionseigenschaften gegeben ist. Es können auch reine organische Lösungsmittel oder Lösungsmittelgemische verdruckt werden, sofern diese für den Einsatz in einem continuous InkJet-Verfahren zum Beispiel mit entsprechenden Leitfähigkeitsadditiven versehen sind.

Nach Bedruckung und erfolgter Extraktion wird der im Extrakt enthaltene verdampfbare Lösungsmittelanteil entweder bei erhöhter Temperatur entfernt oder durch Wahl geeigneter Lösungsmittel zusammen mit den aus der LC-Schicht herausextrahierten Komponenten entfernt. Letzteres geschieht vorzugsweise dann, wenn die extrahierend wirkenden Medien im wesentlichen nur aus zu verdampfenden Lösungsmitteln bestehen. Als Lösungsmittel zur Nachbehandlung eignen sich vorzugsweise solche, die den LC-Film bzw. den aufgebrachten Sekundärdruck nicht angreifen bzw. Lösungsmittel der oben genannten Gruppe (c) sind.

Die dem Angriff des extrahierend wirkenden, flüssigen Mediums ausgesetzten cholesterischen LC-Filme werden mit Hilfe üblicher Druckverfahren auf geeignete, insbesondere gegenüber Chemikalien unempfindliche Substrate oder Bedruckstoffe aufgebracht. Als Applikationsmethoden eignen sich allgemein Tauchen, Spritzen, Rollen, Walzen, Gießen, Rakeln und Drucken. Es lassen sich alle üblichen Druckverfahren anwenden, zum Beispiel Hoch-, Tief-, Flexo-, Offset-, Sieb-, Prägedruck, Tintenstrahldruck, Heißsiegeldruck oder andere Transferdruckverfahren. Druckverfahren im Sinne der Erfindungsmeldung sind auch solche, bei denen der cholesterische Film zum Beispiel mittels eines Füllfederhalters oder Kugelschreibers oder anderen Schreibgerätes aufgetragen wird.

Die Schichtdicken der LC-Filme betragen vorzugsweise zwischen 0,5 und 10 µm, besonders bevorzugt zwischen 1 und 5 µm und ganz besonders bevorzugt zwischen 1,5 und 3 µm. Diese im Unterschied zum Beispiel zu der Patentschrift US 6,071,438 geringen Schichtdicken tragen besonders zu der Realisierung des erfindungsgemäßen Verfahrens und seiner Ausführungsvarianten bei, da die extrahierend wirkenden Medien die LC-Schichten komplett und sehr rasch durchdringen können.

Der Polymerisationsgrad bzw. die Netzwerkdichte der cholesterischen LC-Schicht bestimmt in hohem Maße, welcher Farbeffekt im Zuge einer Behandlung mit den erfindungsgemäßen Medien erzielt wird. Ist die Netzwerkdichte zu hoch, so können aus der LC-Schicht in der Regel keine Komponenten extrahiert werden. In einer Ausführungsform der Erfindung wird die Trocknung der LC-Schicht daher so kontrolliert, dass ein bestimmter Anteil davon unpolymerisiert bleibt. Damit stellt sich nicht die maximal mögliche Netzwerkdichte ein. Dies geschieht zum Beispiel im Falle einer Trocknung durch radikalische Polymerisation durch die Auswahl wenig reaktiver Komponenten, etwa durch die Verwendung von Monoacrylaten anstelle von Di- oder Triacrylaten, oder von Methacrylaten anstelle von Acrylaten, durch eine entsprechend geringe UV-Bestrahlungsintensität, eine entsprechend kurze UV-Bestrahlungszeit, ggf. durch die Verwendung von die UV-Strahlung abschwächenden Filtern, durch Inhibitoren, die Sauerstoffkonzentration in der Trocknungsatmosphäre, durch die Konzentration und Auswahl an Aminen und im Falle einer kationischen Polymerisation über die Konzentration an ionischen Photoinitiatoren oder über den Einfluß der Luftfeuchtigkeit. Auch eignen sich UV-Licht absorbierende, gelöste, dispergierte oder suspendierte Bestandteile in der LC-Schicht dazu, die Polymerisation nur unvollständig ablaufen zu lassen.

In einer bevorzugten Ausführungsform sind die extrahierbaren Bestandteile des LC-Films photopolymerisierbare Komponenten, insbesondere im Sinne einer radikalischen oder kationischen Photopolymerisation reaktionsfähige Komponenten, die jedoch in das LC-Polymer bzw. LC-Polymernetzwerk nur ungenügend eingebunden werden, so dass sie extrahierbar sind. Vorzugsweise enthält die polymerisierbare LC-Schicht eine oder mehrere solcher Komponenten

In einer weiteren bevorzugten Ausführungsform enthält das Polymer oder Polymernetzwerk der LC-Schicht Komponenten, welche in dieses auf Grund ihrer strukturellen Beschaffenheit nicht einpolymerisierbar, und damit extrahierbar sind. Besonders bevorzugte extrahierbare Bestandteile des LC-Films sind Komponenten, die im Sinne einer Photopolymerisation, insbesondere im Sinne einer radikalischen oder kationischen Photopolymerisation, nicht reaktionsfähig sind. Vorzugsweise enthält die polymerisierbare LC-Schicht eine oder mehrere solcher Komponenten.

Besonders bevorzugt sind hierbei chemisch reaktionsträge oder nicht polymerisierbare chirale Dotierstoffe, die zu dem Zwecke eingebracht werden, die helikale Ganghöhe der cholesterischen Flüssigkristalle zu beeinflussen. Werden diese Bestandteile durch Extraktion aus dem vollständig oder teilweise ausgehärteten LC-Film wieder vollständig oder teilweise entfernt, so ist das Resultat eine Veränderung der Reflexionseigenschaften des LC-Filmes, was sich in einer Verschiebung der reflektierten Wellenlängen in den höherenergetischen Bereich äußert.

"Vollständig ausgehärteter LC- oder Flüssigkristallfilm" heißt in diesem Zusammenhang, dass die Prüfkriterien der "Stapelfähigkeit" nach DIN EN ISO 4622 und der "Durchtrocknung" nach DIN EN 29117 erfüllt sind. "Teilweise ausgehärtete LC-Filme" hingegen können so ausgehärtet sein, dass sie sich zum Beispiel mit Hilfe üblicher Klischeedruckverfahren bedrucken lassen, ohne dass sie eine Quetschung erfahren. Ist dies nicht möglich, so werden berührungsfreie Druckverfahren herangezogen, zum Beispiel auf der Basis von Tintenstrahldruckern.

In jedem Falle sind die erfindungsgemäßen LC-Schichten so weit gehärtet, dass die aufgebrachten und die Extraktionsmittel enthaltenden Sekundärdrucke auf ihnen ausreichend haften und nicht ausfransen oder verlaufen.

In einer bevorzugten Variante enthalten die vollständig oder teilweise gehärteten LC-Filme Moleküle mit reaktiven Gruppen, die speziell auf eine oder mehrere Komponenten des sekundär applizierten Druckes (des Extraktionsmittels) abgestimmt sind. Auf diese Weise kann zum Beispiel eine besonders gute Benetzung und Adhäsion der LC-Schicht mit dem Extraktionsmittel oder eine chemische Anbindung der LC-Schicht an das Extraktionsmittel bewerkstelligt werden.

Es besteht auch die Möglichkeit, verschiedene Bereiche eines LC-Films durch zeitliche oder örtliche Variation der UV-Bestrahlungsleistung unterschiedlich stark auszuhärten und mit einem extrahierend wirkenden Medium so zu beschichten, dass die weniger ausgehärteten Bereiche stärker angegriffen werden als die besser ausgehärteten, womit sich unterschiedliche Farbeffekte ergeben.

Werden nur teilweise ausgehärtete LC-Filme erfindungsgemäß eingesetzt, so erfolgt ihre vollständige Trocknung und Aushärtung in einem dritten Schritt, nach erfolgter Modifikation durch Extraktion, mit Hilfe geeigneter, dem Fachmann bekannter Verfahren.

In einer weiteren bevorzugten Ausführungsform wird in umgekehrter Weise das extrahierend wirkende Medium zuerst auf ein Substrat aufgebracht und dann der LC-Film darüber gedruckt. Dadurch erfährt der LC-Film nur an bestimmten Stellen eine Modifikation seiner chemischen und physikalischen Eigenschaften. Auch können Bereiche mit unterschiedlichen Extraktionsmitteln unterschiedlicher Extraktionskraft vorgedruckt werden, wodurch nach Beschichtung mit dem LC-Film ein mehrfarbiges Bild realisiert werden kann.

In einer weiteren bevorzugten Ausführungsform werden mehrere LC-Schichten mit zunehmender Empfänglichkeit gegenüber einem extrahierend wirkenden Medium übereinander gedruckt, wodurch sich weitere Möglichkeiten zur Realisierung von mehrfarbigen Bildern ergeben.

In einer weiteren bevorzugten Ausführungsform wird eine LC-Schicht, welche extrahierbare Bestandteile enthält, an bestimmten vorgegebenen Stellen zum Beispiel mittels eines Verfahrens des Flexodruckes mit einer definierten, transparenten Schutzschicht versehen, welche einerseits mit der LC-Schicht keine Wechselwirkung eingeht und andererseits resistent ist gegenüber dem Angriff eines extrahierend wirkenden Mediums. Anschließend behandelt man mit dem Extraktionsmittel wie oben beschrieben, wodurch lediglich die ungeschützten, d.h. nicht mit der Schutzschicht versehenen Bereiche der LC-Schicht eine Änderung ihrer Eigenschaften erfahren. Eine weitere bevorzugte Varianten dieser Ausführungsform betrifft ein Verfahren, bei dem anstelle einer definierten, transparenten, fest haftenden Schutzschicht eine wiederablösbare bzw. wiederabziehbare Maske verwendet wird.

Allgemein dienen das erfindungsgemäße Verfahren und seine Ausführungsformen auch dazu, um den unerlaubten Engriff in geschützte Bereiche von Sicherheitsdokumenten, etwa mit Hilfe des Einsatzes von Lösungsmitteln, dahingehend kenntlich zu machen, dass es dann zu einem deutlichen Farbwechsel der cholesterischen LC-Schicht kommt.

Das erfindungsgemäße LC-Material ist vorzugsweise ein polymerisierbares LC-Material mit einer cholesterischen oder chiral smektischen, zum Beispiel chiral smektisch C- (oder S_{C}*)-Phase, besonders bevorzugt ein cholesterisches LC-Material. Das LC-Material ist vorzugsweise eine Mischung aus zwei oder mehr Verbindungen, von denen mindestens eine Verbindung eine oder mehrere polymerisationsfähige Gruppen trägt. Das polymerisierbare LC-Material enthält vorzugsweise mindestens eine mesogene Verbindung mit einer polymerisationsfähigen Gruppe (monoreaktive Verbindung) und mindestens eine mesogene Verbindung mit zwei oder mehr polymerisationsfähigen Gruppen (di- oder multireaktive Verbindung).

Die vor- und nachstehend genannten polymerisierbaren Verbindungen sind vorzugsweise Monomere.

Das polymerisierbare LC-Material enthält vorzugsweise eine oder mehrere polymerisierbare mesogene Verbindungen und mindestens eine chirale Verbindung. Die chirale Verbindung kann polymerisierbar oder nicht polymerisierbar sein. Sie kann eine mesogene oder nicht-mesogene Verbindung sein.

Besonders bevorzugt ist ein polymerisierbares LC-Material enthaltend mindestens ein mesogenes oder flüssigkristallines Monomer mit mindestens einer, vorzugsweise zwei oder mehr polymerisationsfähigen Gruppen, und mindestens eine chirale Verbindung, die optional polymerisierbar und/oder mesogen ist.

Für die vorliegende Erfindung geeignete polymerisierbare mono-, di- oder multireaktive mesogene Verbindungen sind dem Fachmann bekannt oder können nach an sich bekannten Methoden hergestellt werden, die in Standardwerken der organischen Chemie beschrieben sind, wie beispielsweise Houben-Weyl, Methoden der organischen Chemie, Thieme-Verlag, Stuttgart.

Typische Beispiele für polymerisierbare mesogene Verbindungen, die für die vorliegende Erfindung geeignet sind, sind beispielsweise offenbart in WO 93/22397, EP 0 261 712, DE 195 04 224, WO 95/22586 und WO 97/00600. Die in diesen Dokumenten offenbarten Verbindungen sollen jedoch lediglich als Beispiele dienen, ohne den Umfang der Erfindung einzuschränken.

Beispiele für besonders geeignete und bevorzugte chirale und achirale polymerisierbare mono- und direaktive mesogene Verbindungen (reaktive Mesogene) sind in der folgenden Liste gezeigt, die die Erfindung erläutern soll, ohne sie einzuschränken

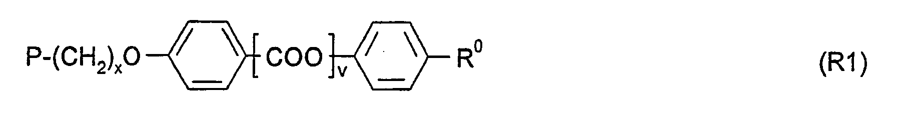

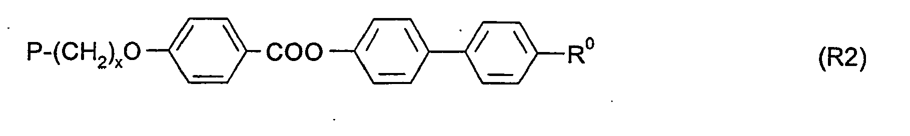

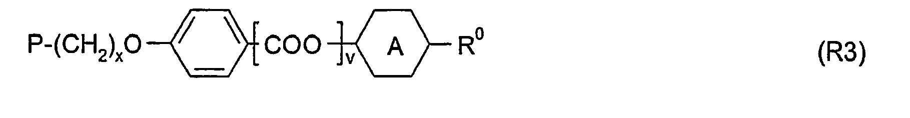

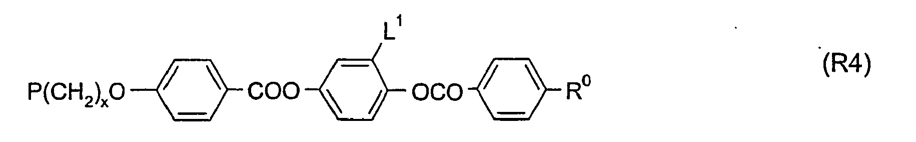

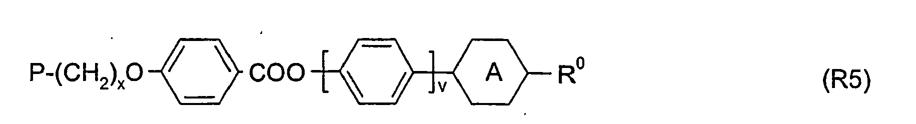

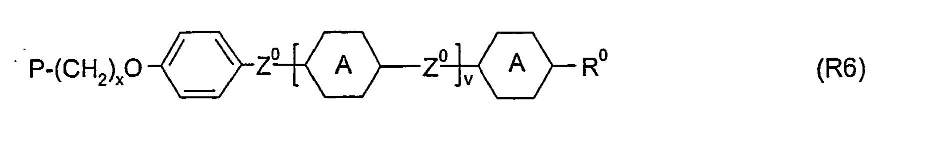

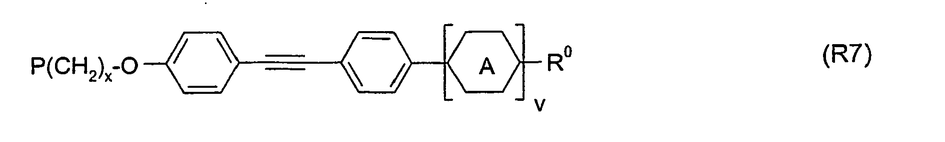

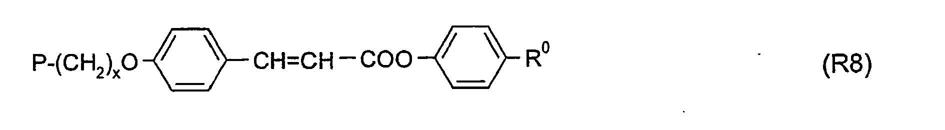

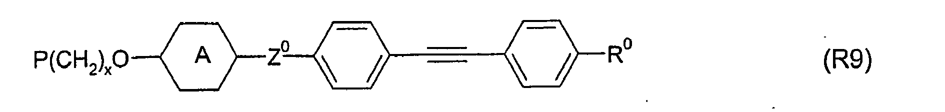

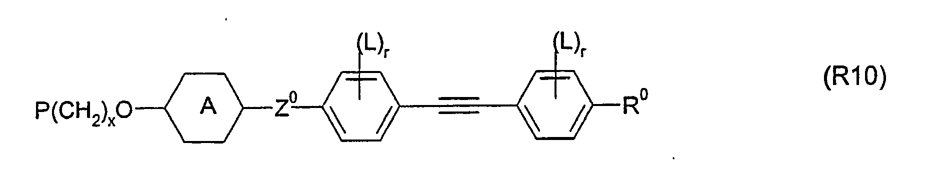

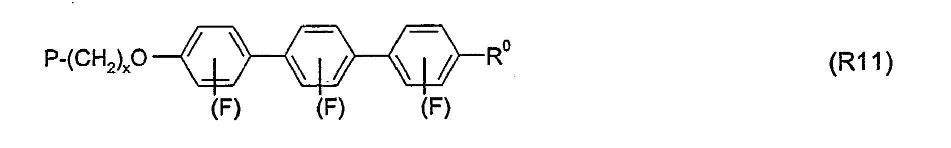

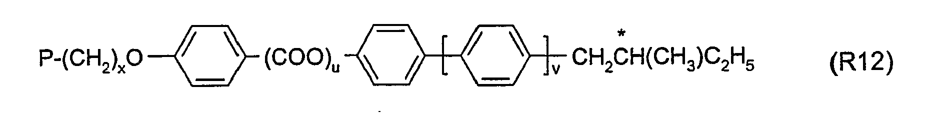

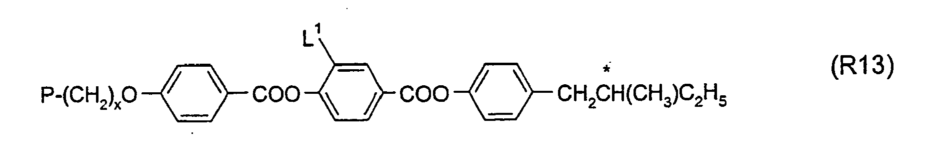

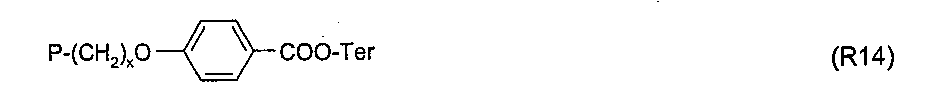

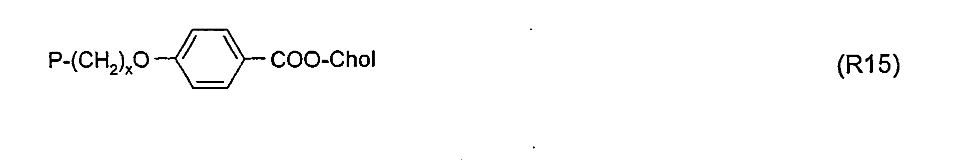

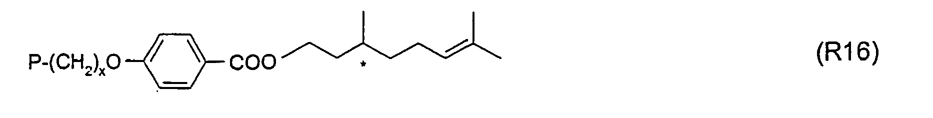

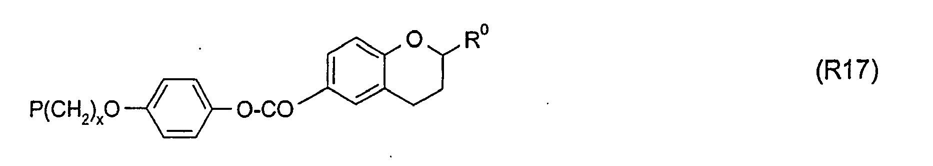

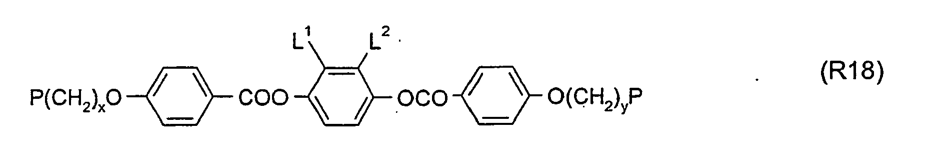

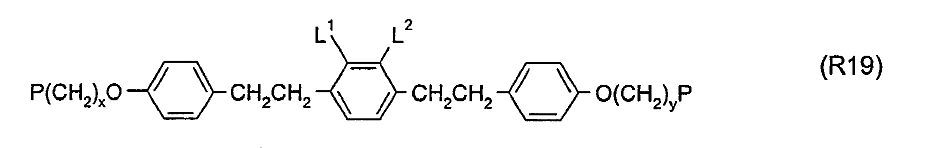

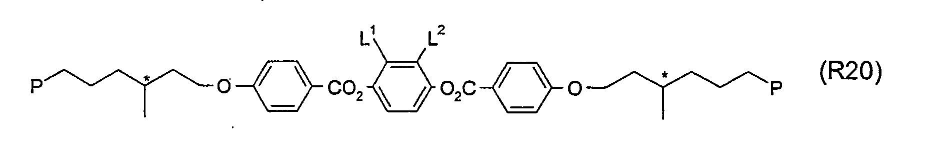

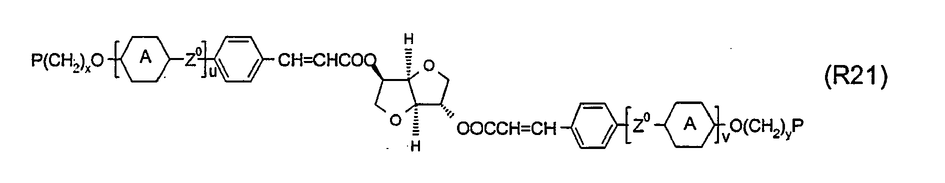

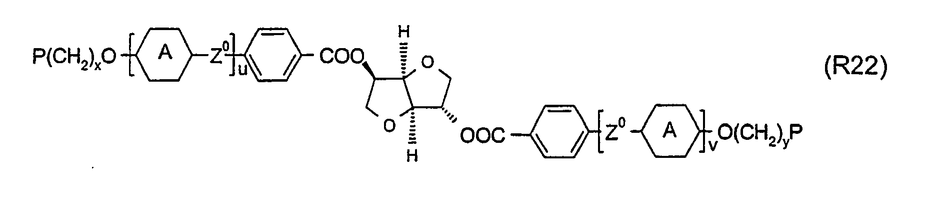

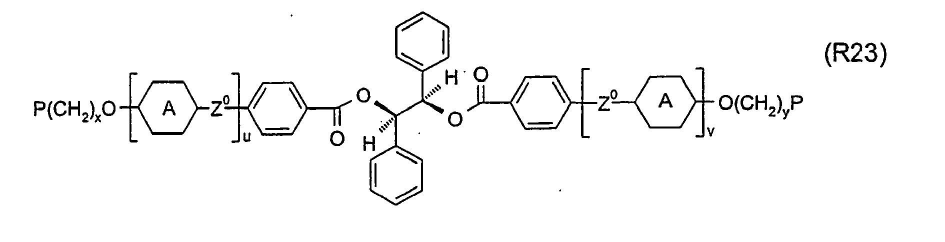

In den oben gezeigten Formeln bedeutet P eine polymerisierbare Gruppe, vorzugsweise Acryl, Methacryl, Vinyl, Vinyloxy, Propenylether, Epoxy, Oxetan oder Styryl, x und y jeweils unabhängig voneinander eine ganze Zahl von 1 bis 12 , A 1,4-Phenylen welches auch durch L¹ ein-, zwei-, drei-oder vierfach substituiert sein kann, oder 1,4-Cyclohexylen, u und v jeweils unabhängig voneinander 0 oder 1, Z⁰ -COO-, -OCO-, -CH₂CH₂-, -CH=CH-, -C≡C- oder eine Einfachbindung, R⁰ eine polare oder unpolare Gruppe, Ter einen Terpenrest wie zum Beispiel Menthyl, Chol eine Cholesterylgruppe, r 0, 1, 2, 3 oder 4, L, L¹ und L² jeweils unabhängig voneinander H, F, Cl, CN oder optional halogeniertes Alkyl, Alkoxy, Alkylcarbonyl, Alkylcarbonyloxy, Alkoxycarbonyl oder Alkoxycarbonyloxy mit 1 bis 7 C-Atomen. Die Phenylringe in den oben gezeigten Formeln sind optional durch L ein-, zwei-, drei- oder vierfach substituiert.

Der Begriff 'polare Gruppe' bedeutet in diesem Zusammenhang eine Gruppe ausgewählt aus F, Cl, CN, NO₂, OH, OCH₃, OCN, SCN, optional fluoriertem Alkylcarbonyl, Alkylcarbonyloxy, Alkoxycarbonyl oder Alkoxycarbonyloxy mit bis zu 4 C-Atomen oder mono-, oligo- oder polyfluoriertes Alkyl oder Alkoxy mit 1 bis 4 C-Atomen. Der Begriff 'unpolare Gruppe' bedeutet in diesem Zusammenhang optional halogeniertes Alkyl, Alkoxy, Alkylcarbonyl, Alkylcarbonyloxy, Alkoxycarbonyl oder Alkoxycarbonyloxy Alkyl mit 1 oder mehr, vorzugsweise 1 bis 12 C-Atomen, welches nicht unter die obige Definition 'polare Gruppe' fällt.

Eine bevorzugte LC-Mischung enthält
a) eine oder mehrere direaktive achirale und/oder chirale mesogene Verbindungen, und
b) eine oder mehrere monoreaktive achirale und/oder chirale mesogene Verbindungen,
wobei mindestens eine der Komponenten a) und b) eine chirale Verbindung enthält.

Eine weitere bevorzugte LC-Mischung enthält
a) eine oder mehrere direaktive achirale mesogene Verbindungen,
b) eine oder mehrere monoreaktive achirale mesogene Verbindungen,
c) eine oder mehrere nicht polymerisierbare chirale Verbindungen.

Eine besonders bevorzugte LC-Mischung enthält
a) 5 - 70 %, vorzugsweise 5 - 50 %, besonders bevorzugt 5 - 40 % einer oder mehrerer direaktiver achiraler und/oder chiraler mesogener Verbindungen,
b) 30 - 95 % vorzugsweise 50 - 75 % einer oder mehrerer monoreaktiver achiraler und/oder chiraler mesogener Verbindungen.

Eine weitere bevorzugte LC-Mischung enthält
a) 5 - 70 %, vorzugsweise 5 - 50 %, besonders bevorzugt 5 - 40 % einer oder mehrerer direaktiver achiraler mesogener Verbindungen,
b) 30 - 95 % vorzugsweise 50 - 75 % einer oder mehrerer monoreaktiver achiraler chiraler mesogener Verbindungen,
c) 0,1 bis 15 %, vorzugsweise 0,5 bis 10 %, besonders bevorzugt 1 bis 5 % einer oder mehrerer nicht polymerisierbarer chiraler Verbindungen.

Besonders bevorzugte chirale Verbindungen sind aus dem Stand der Technik bekannte chirale Dotierstoffe, die zur Erzeugung von verdrillten Flüssigkristallphasen eingesetzt werden.

Geeignete Dotierstoffe sind beispielsweise ausgewählt aus den kommerziell erhältlichen Verbindungen Cholesterylnonanoat (CN), CB15, R/S-811, R/S-1011, R/S-2011, R/S-3011 oder R/S-4011 (Merck KGaA, Darmstadt). Besonders geeignet sind Dotierstoffe mit hohem Verdrillungsvermögen, z.B. chirale Zuckerderivate, insbesondere Derivate von Dianhydrohexitolen wie Isosorbit, Isomannit oder Idit, besonders bevorzugt Isosorbit-Derivative wie z.B. in WO 98/00428 offenbart. Ferner bevorzugt sind Hydrobenzoinderivate wie z.B. in GB 2,328,207 beschrieben, chirale Binaphthyle wie z.B. in WO 02/94805 beschrieben, chirale Binaphthole wie z.B. in WO 02/34739 beschrieben, chirale TADDOLe wie z.B. in WO 02/06265 beschrieben, und chirale Verbindungen mit einer fluorierten Brückengruppe und einer terminalen oder zentralen chiralen Gruppe wie z.B. in WO 02/06196 and WO 02/06195 beschrieben.

In einer bevorzugten Ausführungsform enthält das LC-Material bis zu 70%, vorzugsweise 1 bis 50 % einer oder mehrerer nicht-mesogener Verbindungen mit einer polymerisierbaren Gruppe, wie zum Beispiel Alkylacrylate oder Alkylmethacrylate mit Alkylgruppen mit 1 bis 20 C-Atomen.

In einer weiteren bevorzugten Ausführungsform enthält das LC-Material bis zu 40 %, vorzugsweise 1 bis 20 % einer oder mehrerer nicht-mesogener Verbindungen mit zwei oder mehr polymerisierbaren Gruppen, wie zum Beispiel Alkyldiacrylate oder Alkyldimethacrylate mit 1 bis 20 C-Atomen, oder höherfunktionelle Vernetzer wie zum Beispiel Trimethylpropan-trimethacrylat oder Pentaerythritol-tetraacrylat.

In einer weiteren bevorzugten Ausführungsform enthält das LC-Material ein oder mehrere Kettenübertragungsreagentien, zum Beispiel Thiolverbindungen wie Dodekanthiol oder Trimethylpropan-tri(3-mercaptopropionat), insbesondere flüssigkristalline Thiolverbindungen. Durch Zugabe solcher Reagentien kann zum Beispiel die freie Kettenlänge der LC-Polymere, oder die Kettenlänge zwischen zwei Vernetzungspunkten, reduziert werden.

In einer weiteren bevorzugten. Ausführungsform enthält das LC-Material ein oder mehrere polymere oder polymerisierbare Bindemittel oder Dispergierhilfsmittel, wie zum Beispiel in WO 96/02597 beschrieben.

Das polymerisierbare LC-Material kann auch weitere Komponenten oder Hilfsmittel enthalten wie zum Beispiel Katalysatoren, Sensibilisatoren, Stabilisatoren, Kettenübertragungsreagentien, Inhibitoren, Comonomere, oberflächenaktive Substanzen, Weichmacher, Benetzungsmittel, Dispergierhilfsmittel, Verlaufsmittel, Viskositätsminderer, Hydrophobisierungsmittel, Adhäsionsmittel, Fließmittel, Entschäumungsmittel, Entlüftungs- oder Entgasungsmittel, Verdünner, Reaktivverdünner, Farbstoffe, Farbmittel oder Pigmente.

In einer weiteren bevorzugten Ausführungsform enthält das LC-Material ein oder mehrere Additive, zum Beispiel oberflächenaktive Substanzen, die eine planare Ausrichtung der LC-Moleküle auf dem Substrat induzieren oder verstärken. Geeignete Substanzen sind dem Fachmann bekannt und zum Beispiel in J. Cognard, Mol.Cryst.Liq.Cryst. 78, Supplement 1, 1-77 (1981) beschrieben. Besonders bevorzugt sind nichtionische Verbindungen, zum Beispiel nichtionische Fluorkohlenwasserstoffe wie das kommerziell erhältliche Fluorad FC-171® (3M) oder Zonyl FSN ® (DuPont).

Im allgemeinen reichen jedoch die Scherkräfte, welche im Zuge des Beschichtens oder Bedruckens des LC-Materials auf das Substrat auftreten, zum spontanen Ausbilden einer homogenen, makroskopisch einheitlichen planaren Orientierung der LC-Moleküle in der cholesterischen Phase aus.

Nach dem Beschichten oder Bedrucken des Substrats mit dem LC-Material erfolgt vorzugsweise ein Trocknungsprozeß, der auf Grund der polymerisierbaren härtenden Bestandteile des LC-Materials sowie der besonderen Empfindlichkeit der planaren Textur gegenüber chemischen und physikalischen Einflüssen vorzugsweise unter Inertgas (zum Beispiel Stickstoff oder Argon) durchgeführt wird.

In einem weiteren Schritt wird die LC-Schicht mit dem Extraktionsmittel bedruckt. Durch die Extraktionsprozesse verschiebt sich die Farbe der LC-Schicht in den kurzwelligen Bereich, nicht tangierte Bereiche bleiben unverändert.

Im nächsten Schritt erfolgt die teilweise Polymerisation oder Aushärtung der LC-Schicht in situ, vorzugsweise durch Behandlung mit aktinischer Strahlung, wie zum Beispiel Bestrahlung mit Licht, insbesondere UV-Licht, IR-Licht oder sichtbarem Licht, Röntgenstrahlen, Gammastrahlen oder hochenergetischen Partikeln wie zum Beispiel Ionen oder Elektronen. Besonders bevorzugt ist Photopolymerisation, insbesondere Polymerisation mit UV-Licht. Als Strahlungsquelle kann zum Beispiel eine einzelne UV-Lampe oder eine Reihe von UV-Lampen verwendet werden. Andere mögliche Strahlungsquellen sind zum Beispiel lichtemittierende Halbleiter wie LED's oder Halbleiterlaser, oder allgemein Laser, wie UV-Laser, IR-Laser oder Laser im sichtbaren Wellenlängenbereich.

Zum Beispiel können eine oder mehrere Quecksilberniederdrucklampen mit einer Bestrahlungsstärke von jeweils 10 mW/cm² eingesetzt werden, die quer zur Laufrichtung des Substrats beim Beschichtungsverfahren angeordnet sind. Auf Grund des günstigen Temperaturprofils dieser Strahlungsquellen kommt es zu keiner weiteren Temperaturbelastung des LC-Materials während des Trocknungsvorganges. Über die Anzahl der eingesetzten Niederdrucklampen sowie die vorgegebene Härtungsgeschwindgkeit läßt sich das Ausmaß der Polymerisation steuern. So kann zum Beispiel eine trockene, jedoch nicht stapelfähige LC-Schicht erzeugt werden. Diese besitzt, weil sie nicht vollständig gehärtet ist und einen nicht polymerisierbaren oder reaktionsträgen chiralen Dotierstoff als extrahierbaren Bestandteil enthält, ideale Voraussetzungen zur Realisierung des erfindungsgemäßen Verfahrens.

Die Polymerisation wird vorzugsweise in Gegenwart eines Initiators durchgeführt, der die aktinische Strahlung absorbiert. Bei UV-Photopolymerisation wird zum Beispiel ein Photoinitiator verwendet, der bei UV-Bestrahlung zerfällt und dabei freie Radikale oder Ionen freisetzt, welche eine Polymerisationsreaktion auslösen. UV-Photoinitiatoren sind besonders bevorzugt. Solche Photoinitiatoren sind dem Fachmann bekannt und kommerziell erhältlich, wie zum Beispiel Irgacure® 907, Irgacure® 651, Irgacure® 184, Darocure® 1173 oder Darocure® 4205 (Ciba AG) oder UVI 6974 (Union Carbide).

Im nächsten Schritt erfolgt optional die endgültige Aushärtung der zuvor nur teilweise gehärteten LC-Schicht. Im Unterschied zum vorigen Schritt ist die LC-Schicht nun weit weniger empfindlich gegenüber Wärme oder einer Aushärtung in Anwesenheit von Luftsauerstoff. Zur endgültigen Aushärtung wird vorzugsweise eine stärkere Strahlungsquelle als beim teilweisen Aushärten verwendet, zum Beispiel ein konventioneller Mitteldruckstrahler mit einer UV-Bestrahlungsstärke von beispielsweise 1 W/cm², so dass die LC-Schicht ohne relevanten Abfall der UV-Intensität druchdrungen und auch die weiter von der UV-Lampe entfernten LC-Bereiche endgültig ausgehärtet werden. Eine Empfindlichkeit gegenüber dem Extraktionsmittel ist nach der endgültigen Aushärtung i.A. nicht mehr oder nicht mehr im selben Ausmaß wie vor der Aushärtung gegeben.

Soweit erforderlich, kann in einem vierten Schritt aber auch noch ein gegenüber bestimmten Substanzen unempfindlicher Schutzlack auf die LC-Schicht appliziert werden. Geeignet sind hierfür kommerziell erhältliche strahlungshärtende Lacke beispielsweise vom Typ 806.961 der Firma Sicpa.

Die folgenden Beispiele sollen die Erfindung erläutern, ohne sie einzuschränken

### Beispiel 1

In einem ersten Schritt wird über ein auf 70 °C beheiztes Flexodruckwerk die polymerisierbare cholesterische LC-Mischung C1 auf eine geschwärzte Polyethylenterephtalat-Folie gedruckt.

### C1:

| | |
|---|---|
| (A) | 17.65 % |
| (B) | 37.47 % |
| (C) | 32.26 % |
| (D) | 3.69 % |
| (E) | 4.86% |
| Addid 900 | 1.00 % |
| Irgacure 369 | 2.99 % |
| Irganox 1076 | 0.08 % |

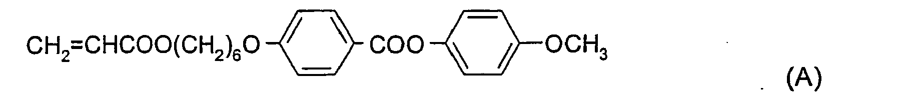

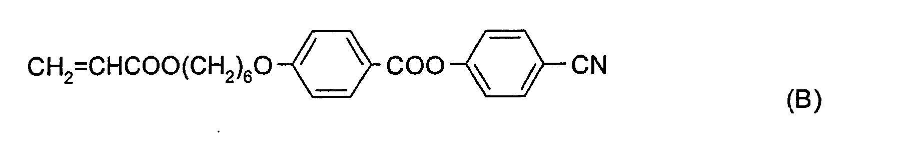

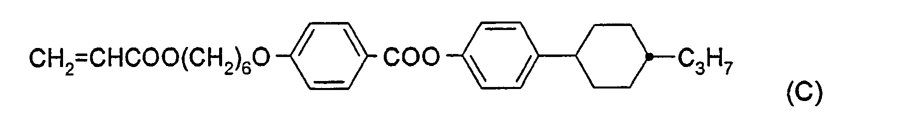

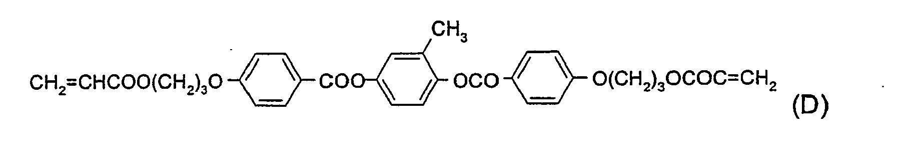

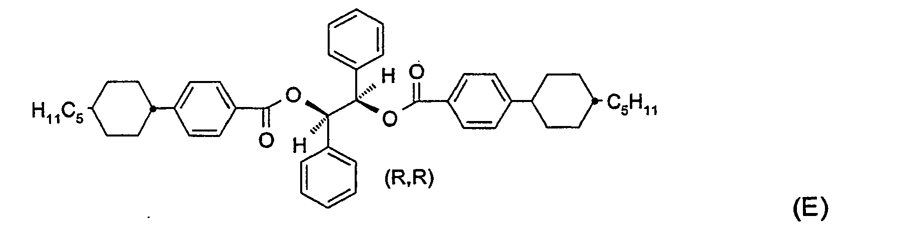

Die Verbindungen (A), (B) und (D) können wie in in D.J.Broer et al., Makromol.Chem. 190, 3201-3215 (1989) beschrieben oder in Analogie dazu hergestellt werden. Verbingung (C) ist aus GB 2,280,445 A1 bekannt. Verbindung (E) ist aus GB 2,328,207 A1 bekannt. Irgacure 369® ist ein kommerziell erhältlicher Photoinitiator (Ciba Geigy). Irganox 1076® ist ein kommerziell erhältlicher Stabilisator (Ciba Geigy). Addid 900 ® ist eine kommerziell erhältliches Adhäsionsmittel (Wacker GmbH).

Die cholesterische Mischung C1 enthält in einer Menge von ca. 4,9 Gew.-% einen chiralen Dotierstoff (E) aus der Klasse der Dihydrobenzoine, der nicht über photopolymerisisierbare, funktionelle Gruppen verfügt. Die Folie hat eine Temperatur von ca. 20 °C.

Die Scherkräfte, welche im Zuge des Anpressens des Klischees auf die Folie auf die Bestandteile der mesomorphen Phase wirken, der plötzliche Temperaturabfall von 70 °C auf ca. 20 °C sowie die Realisierung einer flexodrucküblichen Schichtdicke von ca. 2 µm tragen besonders zur homogenen Textur der cholesterischen Flüssigkristallphase bei. Hierbei wird ein Druckbild erhalten, das farb- und polarisationsselektive Eigenschaften aufweist. Die Abmessungen werden unter anderem sowohl von dem verwendeten Klischee als auch von der Raster- und Klischeewalze vorgegeben. Der Begriff "Druckbild" bezieht sich auf Bilder und Zeichen in der Größenordnung von wenigen mm bis zu Vollflächen je nach Anforderung.

Nach dem Farbauftrag folgt Trocknung der LC-Schicht unter Inertgas (Stickstoff oder Argon). Zur teilweisen Aushärtung wird dann die LC-Schicht mit UV-Licht bestrahlt. Als Strahlungsquellen werden hier Quecksilberniederdrucklampen eingesetzt, die quer zur Laufrichtung der Folie angeordnet sind, mit einer UV-C-Bestrahlungsstärke von jeweils 10 mW/cm². Auf Grund des günstigen Temperaturprofils dieser Strahlungsquellen kommt es zu keiner weiteren Temperaturbelastung der LC-Mischung während des Trocknungsvorganges. Bei einer Trocknungsgeschwindigkeit von 20 m /min und einem Bestrahlungsabstand von 8 mm wird eine trockene, jedoch nicht stapelfähige 2 µm dicke LC-Schicht erzeugt, die nicht vollständig gehärtet ist und mit dem chiralen Dotierstoff einen extrahierbaren Bestandteil enthält.

In einem zweiten Schritt wird ein Teil der LC-Schicht mit einem Extraktionsmittel mit Hilfe eines nach dem Continuous Flow-Betrieb arbeitenden Tintenstrahldruckers der Fa. Metronic AG bedruckt. Durch die Extraktionsprozesse verschiebt sich die Farbe der LC-Schicht in den kurzwelligen Bereich, nicht extrahierte Bereiche bleiben unverändert. Die Tinte besteht aus einem Gemisch der Lösungsmittel 2-Butanon, Ethylacetat und Aceton sowie Bindemitteln, Verlaufsmitteln, Benetzungsmitteln und Hilfsstoffen, die nach Verdunsten der Lösungsmittel zusammen einen festen, transparenten Farbfilm ergeben.

In einem dritten Schritt erfolgt die endgültige Aushärtung der zuvor nur teilweise gehärteten LC-Schicht mit einem konventionellen Quecksilber-Mitteldruckstrahler, so dass der Tintenstrahldruck des zweiten Schrittes ohne relevanten Abfall der UV-Intensität druchdrungen und auch die dort befindlichen LC-Bereiche endgültig ausgehärtet werden.

In einem optionalen vierten Schritt wird die gehärtete LC-Schicht mit einem gegenüber bestimmten Substanzen unempfindlichen Schutzlack überzogen.

## Patentansprüche

1. Verfahren zur Modifkation der optischen Eigenschaften von polymerisierbaren oder polymerisierten chiralen Flüssigkristallen, **dadurch gekennzeichnet, dass** es folgende Schritte umfaßt:
i) Aufbringen einer ersten Schicht eines polymerisierbaren oder härtbaren chiralen Flüssigkristallmaterials auf einen Träger,
ii) Teilweises oder vollständiges Polymerisieren oder Härten der ersten Schicht des polymerisierbaren chiralen Flüssigkristallmaterials,
iii) Aufbringen mindestens einer weiteren Schicht eines oder mehrerer extrahierend wirkender Mittel mittels eines Druckverfahrens auf die teilweise oder vollständig polymerisierte oder gehärtete erste Flüssigkristallschicht, und
iv)gegebenfalls vollständiges Polymerisieren oder Härten der ersten Flüssigkristallschicht und/oder einer oder mehrerer der weiteren Schichten.

2. Verfahren nach Anspruch 1, **dadurch gekennzeichnet, dass** das polymerisierbare Flüssigkristallmaterial mindestens ein mesogenes oder flüssigkristallines Monomer mit mindestens einer polymerisationsfähigen Gruppe und mindestens eine chirale Verbindung, die optional polymerisierbar und/oder mesogen ist, enthält.

3. Verfahren nach mindestens einem der Ansprüche 1 bis 2, **dadurch gekennzeichnet, dass** das extrahierend wirkende Mittel ein Lösungsmittel oder Lösungsmittelgemisch ist, das kationisch oder radikalisch nicht polymerisiert werden kann oder gegenüber kationischer oder radikalischer Polymerisation reaktionsträge ist.

4. Verfahren nach mindestens einem der Ansprüche 1 bis 2, **dadurch gekennzeichnet, dass** das extrahierend wirkende Mittel ein Lösungsmittel oder Lösungsmittelgemisch ist, das kationisch oder radikalisch polymerisiert werden kann.

5. Verfahren nach mindestens einem der Ansprüche 1 bis 4, **dadurch gekennzeichnet, dass** das extrahierend wirkende Mittel ein oder mehrere Lösungsmittel ausgewählt aus folgenden Gruppen enthält
(a) unpolar aprotische Lösungsmittel, welche kleine Dipolmomente und niedrige Dielektrizitätskonstanten besitzen, wie Hexan, Benzol, Toluol, Tetrachlorkohlenstoff, Dioxan, Diethylether, oder Tetrahydrofuran,
(b) polar aprotische Lösungsmittel, welche große Dipolmomente und hohe Dielektrizitätskonstanten besitzen,wie Aceton, Nitrobenzol, Dimethylformamid, Dimethylsulfoxid, Methylethylketon (2-Butanon) oder Ethylacetat, und
(c) protische Lösungsmittel, welche stark polare OH- oder NH-Gruppen enthalten und mit anderen Molekülen Wasserstoffbrückenbindungen ausbilden können, wie Methanol, Ethanol, Ethylenglykol oder Anilin.

6. Verfahren nach mindestens einem der Ansprüche 1 bis 5, **dadurch gekennzeichnet, dass** das extrahierend wirkende Mittel eine Druckfarbe ist.

7. Verfahren nach mindestens einem der Ansprüche 1 bis 6, **dadurch gekennzeichnet, dass** das extrahierend wirkende Mittel transparent ist.

8. Verfahren nach mindestens einem der Ansprüche 1 bis 7, **dadurch gekennzeichnet, dass** das extrahierend wirkende Mittel ein oder mehrere Farbstoffe und/oder Pigmente enthält, die im sichtbaren oder unsichtbaren Bereich des elektromagnetischen Spektrums absorbieren.

9. Verfahren nach Anspruch 8, **dadurch gekennzeichnet, dass** mindestens ein Farbstoff und/oder Pigment Fluoreszenz aufweisen.

10. Verfahren nach mindestens einem der Ansprüche 1 bis 9, **dadurch gekennzeichnet, dass** das extrahierend wirkende Mittel eine Tinte, Druckfarbe oder ein Lack ist, welche (r) thermische und elektrische leitfähigkeit, magnetische Suszeptibilität, dielektrische, optische und elasto-mechanische Anisotropie, Fluoreszenz oder Phosphoreszenz aufweist.

11. Verfahren nach mindestens einem der Ansprüche 1 bis 10, **dadurch gekennzeichnet, dass** das extrahierend wirkende Mittel eine oder mehrere mesogene oder flüssigkristalline Verbindungen enthält oder im wesentlichen aus dieser(n) Verbindung(en) besteht, welche in reinem Zustand oder in einem Lösungsmittel gelöst aufgebracht werden.

12. Verfahren nach mindestens einem der Ansprüche 1 bis 11, **dadurch gekennzeichnet, dass** die extrahierbaren Bestandteile der ersten Flüssigkristallschicht aus polymerisierbaren, aber nicht oder nur teilweise polymerisierten Komponenten bestehen.

13. Verfahren nach mindestens einem der Ansprüche 1 bis 11, **dadurch gekennzeichnet, dass** die extrahierbaren Bestandteile der ersten Flüssigkristallschicht aus nicht polymerisierbaren Komponenten bestehen.

14. Verfahren nach Anspruch 13, **dadurch gekennzeichnet, dass** die extrahierbaren Komponenten chirale, nicht polymerisierbare Dotierstoffe sind.

15. Verfahren nach mindestens einem der Ansprüche 1 bis 14, **dadurch gekennzeichnet, dass** die erste Flüssigkristallschicht in Schritt i) mittels eines Druckverfahrens oder eines Beschichtungsverfahrens. auf den Träger aufgebracht wird.

16. Flüssigkristallfilm, hergestellt nach einem Verfahren nach mindestens einem der vorangegangenen Ansprüche.

17. Druckerzeugnis enthaltend eine oder mehrere Schichten eines gehärteten oder polymerisierten chiralen Flüssigkristallmaterials, hergestellt nach einem Verfahren nach mindestens einem der Ansprüche 1 bis 15.

18. Druckerzeugnis nach Anspruch 17, **dadurch gekennzeichnet, dass** es mindestens eine doppelbrechende Markierung enthält.

19. Druckerzeugnis nach Anspruch 17 oder 18, **dadurch gekennzeichnet, dass** mindestens eine der Schichten mit einem Tintenstrahldrucker aufgebracht ist

20. Druckerzeugnis mit einem Druckbild nach mindestens einem der Ansprüche 17 bis 19, **dadurch gekennzeichnet, dass**
i) das Druckbild mindestens einen Bereich mit einem ersten optischen Effekt aufweist, und
ii) das Druckbild mindestens einen Bereich mit einem zweiten optischen Effekt aufweist, der sich von dem ersten optischen Effekt durch eine Verschiebung der optischen Reflexionsbanden zum höherenergetischen Bereich hin unterscheidet.

21. Druckerzeugnis nach mindestens einem der Ansprüche 17 bis 20, **dadurch gekennzeichnet, dass** mindestens eine der Schichten eine optisch variable Komponente zur Erzeugung von optischen Effekten aufweist.

22. Druckerzeugnis nach mindestens einem der Ansprüche 17 bis 21, **dadurch gekennzeichnet, dass** ein optischer Effekt durch die Diffusion von Komponenten aus einem aufgetragenen Mittel einer ersten Schicht in eine andere mit ihr in Kontakt gebrachte zweite Schicht erzeugt wird.

23. Verwendung eines Flüssigkristallfilms oder Druckerzeugnisses nach mindestens einem der Ansprüche 16 bis 22 als dekoratives Element, Sicherheitselement, Authentizitätselement oder Identifikationselement.

24. Sicherheitsmerkmal, Authentizitätsmerkmal oder Identifikationsmerkmal, enthaltend einen Flüssigkristallfilm oder ein Druckerzeugnis nach mindestens einem der Ansprüche 16 bis 22.

25. Ausweisdokument, Geldschein, Wertdokument, Farbtransfer-Folie, reflektive Folie oder optischer Datenträger versehen mit einem Flüssigkristallfilm oder Druckerzeugnis nach mindestens einem der Ansprüche 16 bis 22.

## Claims

1. Method for the modification of the optical properties of polymerisable or polymerised chiral liquid crystals, **characterised in that** it comprises the following steps:
i) application of a first layer of a polymerisable or curable chiral liquid-crystal material to a support,
ii) partial or complete polymerisation or curing of the first layer of the polymerisable chiral liquid-crystal material,
iii) application of at least one further layer of one or more extraction media to the partially or fully polymerised or cured first liquid-crystal layer by means of a printing process, and
iv) where appropriate complete polymerisation or curing of the first liquid-crystal layer and/or one or more of the further layers.

2. Method according to Claim 1, **characterised in that** the polymerisable liquid-crystal material comprises at least one mesogenic or liquid-crystalline monomer containing at least one polymerisable group and at least one chiral compound, which is optionally polymerisable and/or mesogenic.

3. Method according to at least one of Claims 1 to 2, **characterised in that** the extraction medium is a solvent or solvent mixture which cannot be polymerised cationically or by means of free radicals or is unreactive to cationic or free-radical polymerisation.

4. Method according to at least one of Claims 1 to 2, **characterised in that** the extraction medium is a solvent or solvent mixture which can be polymerised cationically or by means of free radicals.

5. Method according to at least one of Claims 1 to 4, **characterised in that** the extraction medium comprises one or more solvents selected from the following groups:
(a) nonpolar aprotic solvents, which have small dipole moments and low dielectric constants, such as hexane, benzene, toluene, carbon tetrachloride, dioxane, diethyl ether or tetrahydrofuran,
(b) polar aprotic solvents, which have large dipole moments and high dielectric constants, such as acetone, nitrobenzene, dimethylformamide, dimethyl sulfoxide, methyl ethyl ketone (2-butanone) or ethyl acetate, and
(c) protic solvents, which contain highly polar OH or NH groups and are able to form hydrogen bonds to other molecules, such as methanol, ethanol, ethylene glycol or aniline.

6. Method according to at least one of Claims 1 to 5, **characterised in that** the extraction medium is a printing ink.

7. Method according to at least one of Claims 1 to 6, **characterised in that** the extraction medium is transparent.

8. Method according to at least one of Claims 1 to 7, **characterised in that** the extraction medium comprises one or more dyes and/or pigments which absorb in the visible or invisible region of the electromagnetic spectrum.

9. Method according to Claim 8, **characterised in that** at least one dye and/or pigment is fluorescent.

10. Method according to at least one of Claims 1 to 9, **characterised in that** the extraction medium is a writing ink, printing ink or surface coating which exhibits thermal and electrical conductivity, magnetic susceptibility, dielectric, optical and elasto-mechanical anisotropy, fluorescence or phosphorescence.

11. Method according to at least one of Claims 1 to 10, **characterised in that** the extraction medium comprises one or more mesogenic or liquid-crystalline compounds or essentially consists of this (these) compound(s), which are applied in the pure state or dissolved in a solvent.

12. Method according to at least one of Claims 1 to 11, **characterised in that** the extractable constituents of the first liquid-crystal layer consist of polymerisable, but non- or only partially polymerised components.

13. Method according to at least one of Claims 1 to 11, **characterised in that** the extractable constituents of the first liquid-crystal layer consist of non-polymerisable components.

14. Method according to Claim 13, **characterised in that** the extractable components are chiral, non-polymerisable dopants.

15. Method according to at least one of Claims 1 to 14, **characterised in that** the first liquid-crystal layer is applied to the support in step i) by means of a printing process or a coating process.

16. Liquid-crystal film produced by a method according to at least one of the preceding claims.

17. Print product comprising one or more layers of a cured or polymerised chiral liquid-crystal material, produced by a method according to at least one of Claims 1 to 15.

18. Print product according to Claim 17, **characterised in that** it comprises at least one birefringent marking.

19. Print product according to Claim 17 or 18, **characterised in that** at least one of the layers has been applied using an ink-jet printer.

20. Print product having a print motif according to at least one of Claims 17 to 19, **characterised in that**
i) the print motif has at least one region having a first optical effect, and
ii) the print motif has at least one region having a second optical effect which differs from the first optical effect through a shift of the optical reflection bands towards the higher-energy region.

21. Print product according to at least one of Claims 17 to 20, **characterised in that** at least one of the layers has an optically variable component for the production of optical effects.

22. Print product according to at least one of Claims 17 to 21, **characterised in that** an optical effect is produced by the diffusion of components out of an applied medium of a first layer into another, second layer brought into contact therewith.

23. Use of a liquid-crystal film or print product according to at least one of Claims 16 to 22 as decorative element, security element, authenticity element or identification element.

24. Security feature, authenticity feature or identification feature comprising a liquid-crystal film or a print product according to at least one of Claims 16 to 22.

25. Identity document, banknote, security, ink-transfer film, reflective film or optical data carrier provided with a liquid-crystal film or print product according to at least one of Claims 16 to 22.

## Revendications

1. Méthode de modification des propriétés optiques de cristaux liquides chiraux polymérisables ou polymérisés, **caractérisée en ce qu'**elle comprend les étapes suivantes :
i) l'application d'une première couche d'un matériau de cristaux liquides chiraux polymérisable ou durcissable à un support,
ii) la polymérisation ou le durcissement partiel(le) ou total(e) de la première couche du matériau de cristaux liquides chiraux polymérisable,
iii) l'application d'au moins une autre couche d'un ou plusieurs milieux d'extraction à la première couche de cristaux liquides partiellement ou totalement polymérisée ou durcie au moyen d'un procédé d'impression, et
iv) le cas échéant, la polymérisation ou le durcissement total(e) de la première couche de cristaux liquides et/ou d'une ou plusieurs parmi les autres couches.

2. Méthode selon la revendication 1, **caractérisée en ce que** le matériau de cristaux liquides polymérisable comprend au moins un monomère mésogénique ou cristallin liquide contenant au moins un groupement polymérisable et au moins un composé chiral, qui est éventuellement polymérisable et/ou mésogénique.

3. Méthode selon au moins l'une des revendications 1 à 2, **caractérisée en ce que** le milieu d'extraction est un solvant ou un mélange de solvants ne pouvant être polymérisé de manière cationique ou au moyen de radicaux libres ou est non réactif vis-à-vis d'une polymérisation cationique ou radicalaire.

4. Méthode selon au moins l'une des revendications 1 à 2, **caractérisée en ce que** le milieu d'extraction est un solvant ou un mélange de solvants pouvant être polymérisé de manière cationique ou au moyen de radicaux libres.

5. Méthode selon au moins l'une des revendications 1 à 4, **caractérisée en ce que** le milieu d'extraction comprend un ou plusieurs solvants choisis parmi les groupes suivants :
(a) les solvants aprotiques non polaires, qui possèdent des moments dipolaires faibles et des constantes diélectriques faibles, tels que l'hexane, le benzène, le toluène, le tétrachlorure de carbone, le dioxane, l'éther diéthylique ou le tétrahydrofurane,
(b) les solvants aprotiques polaires, qui possèdent des moments dipolaires importants et des constantes diélectriques élevées, tels que l'acétone, le nitrobenzène, le diméthylformamide, le diméthylsulfoxyde, la méthyléthylcétone (2-butanone) ou l'acétate d'éthyle, et
(c) les solvants protiques, qui contiennent des groupements OH ou NH hautement polaires et qui sont capables de former des liaisons hydrogène avec d'autres molécules, tels que le méthanol, l'éthanol, l'éthylène glycol ou l'aniline.

6. Méthode selon au moins l'une des revendications 1 à 5, **caractérisée en ce que** le milieu d'extraction est une encre d'impression.

7. Méthode selon au moins l'une des revendications 1 à 6, **caractérisée en ce que** le milieu d'extraction est transparent.

8. Méthode selon au moins l'une des revendications 1 à 7, **caractérisée en ce que** le milieu d'extraction comprend un ou plusieurs colorants et/ou pigments qui absorbent dans la région visible ou invisible du spectre électromagnétique.

9. Méthode selon la revendication 8, **caractérisée en ce qu'**au moins un colorant et/ou pigment est fluorescent.

10. Méthode selon au moins l'une des revendications 1 à 9, **caractérisée en ce que** le milieu d'extraction est une encre d'écriture, une encre d'impression ou un revêtement de surface qui présente une conductivité thermique et électrique, une susceptibilité magnétique, une anisotropie diélectrique, optique et élasto-mécanique, une fluorescence ou une phosphorescence.

11. Méthode selon au moins l'une des revendications 1 à 10, **caractérisée en ce que** le milieu d'extraction comprend un ou plusieurs composés mésogéniques ou liquides cristallins ou est constitué essentiellement de ce ou ces composés, qui sont appliqués à l'état pur ou solubilisés dans un solvant.

12. Méthode selon au moins l'une des revendications 1 à 11, **caractérisée en ce que** les constituants extractibles de la première couche de cristaux liquides sont constitués de composants polymérisables, mais non ou seulement partiellement polymérisés.

13. Méthode selon au moins l'une des revendications 1 à 11, **caractérisée en ce que** les constituants extractibles de la première couche de cristaux liquides sont constitués de composants non polymérisables.

14. Méthode selon la revendication 13, **caractérisée en ce que** les constituants extractibles sont des dopants chiraux non polymérisables.

15. Méthode selon au moins l'une des revendications 1 à 14, **caractérisée en ce que** la première couche de cristaux liquides est appliquée au support dans l'étape i) au moyen d'un procédé d'impression ou d'un procédé de revêtement.

16. Film de cristaux liquides produit par une méthode selon au moins l'une des revendications précédentes.

17. Produit d'impression comprenant une ou plusieurs couches d'un matériau de cristaux liquides chiraux durci ou polymérisé, produit par une méthode selon au moins l'une des revendications 1 à 15.

18. Produit d'impression selon la revendication 17, **caractérisé en ce qu'**il comprend au moins un marquage biréfringent.

19. Produit d'impression selon la revendication 17 ou 18, **caractérisé en ce qu'**au moins l'une des couches a été appliquée à l'aide d'une imprimante à jet d'encre.

20. Produit d'impression ayant un motif d'impression selon au moins l'une des revendications 17 à 19, **caractérisé en ce que**
i) le motif d'impression possède au moins une région ayant un premier effet optique, et
ii) le motif d'impression possède au moins une région ayant un deuxième effet optique qui diffère du premier effet d'optique au moyen d'un déplacement des bandes de réflexion optique vers la région d'énergie supérieure.

21. Produit d'impression selon au moins l'une des revendications 17 à 20, **caractérisé en ce qu'**au moins l'une des couches possède un composant optiquement variable pour la production d'effets optiques.

22. Produit d'impression selon au moins l'une des revendications 17 à 21, **caractérisé en ce qu'**un effet optique est obtenu par la diffusion de composants hors d'un milieu appliqué d'une première couche vers une autre deuxième couche, mise en contact avec celle-ci.

23. Utilisation d'un produit d'impression ou film de cristaux liquides selon au moins l'une des revendications 16 à 22, comme élément décoratif, élément de sécurité, élément d'authentification ou élément d'identification.

24. Dispositif de sécurité, dispositif d'authentification ou dispositif d'identification comprenant un produit d'impression ou film de cristaux liquides selon au moins l'une des revendications 16 à 22.

25. Document d'identité, billet de banque, film à transfert d'encre, document de sécurité, film réfléchissant ou support de données optique pourvu d'un produit d'impression ou film de cristaux liquides selon au moins l'une des revendications 16 à 22.
